# EUROPÄISCHE PATENTSCHRIFT

(11) **EP 3 560 056 B1**
(45) Veröffentlichungstag und Bekanntmachung des Hinweises auf die Patenterteilung: **08.03.2023**
(21) Anmeldenummer: 17818097.2
(22) Anmeldetag: 12.12.2017
(51) Int. Cl.: H02J 3/32, H02J 13/00, G06Q 50/06

(54) **ZENTRALSPEICHER UND STEUERUNGSTECHNIK MIT ENERGIE MANAGEMENT**
CENTRAL ACCUMULATOR AND CONTROL TECHNOLOGY WITH ENERGY MANAGEMENT
MÉMOIRE CENTRALE ET TECHNIQUE DE COMMANDE À GESTION D'ÉNERGIE

(30) Priorität: 21.12.2016 DE 102016225697
(43) Veröffentlichungstag der Anmeldung: 30.10.2019
(73) Patentinhaber: Bayerische Motoren Werke Aktiengesellschaft, 80809 München (DE)
(72) Erfinder: KOLLING, Joachim, 85386 Eching (DE); SCHMID, Thomas, 82194 Gröbenzell (DE)
(86) Internationale Anmeldenummer: PCT/EP2017/082476
(87) Internationale Veröffentlichungsnummer: WO 2018/114489

(56) Entgegenhaltungen:
- DE-A1-102012 113 050
- US-A1- 2014 091 753

## Beschreibung

Die vorliegende Erfindung betrifft einen Zentralspeicher und eine Steuerungstechnik zum Austausch von elektrischer Energie zwischen dem Zentralspeicher und einem elektrischen Übertragungsnetz.

Elektrische Übertragungsnetze verbinden Haupt-Energieversorger mit zahlreichen Anschlussteilnehmern, die vornehmlich Energie aus dem Übertragungsnetz verbrauchen. Ein elektrisches Übertragungsnetz wird in der Regel von einem oder mehreren Netzbetreibern operativ betrieben. Der Netzbetreiber sorgt für eine bedarfsgerechte Instandhaltung und Dimensionierung des Übertragungsnetzes und sollte Stromhändlern sowie Stromlieferanten einerseits und Anschlussteilnehmern andererseits einen Zugang zum Übertragungsnetz gewähren, um elektrischen Strom als Energieflüsse mit dem Übertragungsnetz auszutauschen. Die Netzbetreiber haben weiterhin die Aufgabe, bei Bedarf Regelleistung zu beschaffen und dem Übertragungsnetz zur Verfügung zu stellen, um Netzschwankungen möglichst gering zu halten, die sich durch ein Missverhältnis zwischen zu einem Zeitpunkt erzeugter und verbrauchter elektrischer Energie ergeben. In Deutschland gibt es derzeit vier Netzbetreiber die miteinander verbundene Teilnetze betreiben und administrieren.

Es ist bekannt, dass starke momentane oder periodenweise Abweichungen zwischen den in das Übertragungsnetz hineinfließenden Strommengen und aus dem Übertragungsnetz entnommenen Strommengen zu einer Destabilisierung der Netzfrequenz führen. Um einer Abweichung der momentanen Netzfrequenz von einer Soll-Frequenz entgegen zu wirken, muss Regelleistung erbracht werden.

Unter Regelleistung wird die gesteuerte Zuführung oder Entnahme von elektrischer Energie zu oder von dem elektrischen Übertragungsnetz verstanden, die zum Zwecke einer Frequenzstabilisierung vorgenommen wird, d.h. um die momentane Netzfrequenz der Soll-Frequenz anzunähern.

Es ist weiterhin bekannt, einen Zentralspeicher mit einer Mehrzahl an elektrischen Speichereinheiten für die Erbringung von Zentralleistung zu verwenden. Damit durch einen Zentralspeicher Regelleistung erbracht werden kann, muss dieser strenge technische Anforderungen erfüllen und in einer Überprüfung präqualifiziert werden.

Für die Erbringung von Regelleistung sind verschiedene Klassen definiert, insbesondere die Erbringung von Primär-Regelleistung und Sekundär-Regelleistung. Für die Primär-Regelleistung muss innerhalb weniger Sekunden bis maximal 30 Sekunden vollständig und für eine Zeitdauer von bis zu 15 Minuten die zu erbringende Leistung zur Verfügung gestellt werden. Für die Sekundär-Regelleistung sind andere Reaktionsdauern sowie maximale Erbringungsintervalle festgelegt, die etwas geringere technische Anforderungen verkörpern.

Es ist in der Praxis bekannt, Batteriesysteme, insbesondere basierend auf Lithium-Ionen-Technik, für den Aufbau von sogenannten Zentralspeichern zu verwenden.

Zu dem bekannten Stand der Technik gehören die Dokumente DE 10 2012 113 050 A1 und US 2014/0091753 A1.

Es ist Aufgabe der vorliegenden Erfindung, einen verbesserten Zentralspeicher sowie ein verbessertes Verfahren zu dessen Nutzung aufzuzeigen. Die Erfindung löst diese Aufgabe durch die Merkmale der eigenständigen Ansprüche.

Die vorliegende Offenbarung betrifft in der Gesamtheit ein System zur Fernübertragung elektrischer Energie von Anschlussteilnehmern in eine fremdkontrollierbare Speichersektion eines Zentralspeichers sowie die Nutzung der übertragenen Energie für das Laden oder Entladen einer weiteren eigenkontrollierten Speichersektion des Zentralspeichers. In dem System können verschiedene Vorrichtungen und Verfahren zusammenwirken, die jeweils einen Beitrag leisten. Diese Vorrichtungen und Verfahren sind nach folgend als separate Haupt-Aspekte dargestellt.

Ein erster Haupt-Aspekt der vorliegenden Offenbarung betrifft einen Zentralspeicher, der einerseits eine eigenkontrollierte Speichersektion zur Erbringung von Regelleistung umfasst sowie andererseits eine fremdkontrollierbare Speichersektion, wobei zwischen oder während Vorgängen der Erbringung von Regelleistung zwischen der eigenkontrollierten Speichersektion und der fremdkontrollierbaren Speichersektion ein Ladungstransfer stattfindet. Der Ladungstransfer erfolgt insbesondere, um einen Ist-Ladezustand der eigenkontrollierten Speichersektion einem Soll-Ladezustand anzunähern. Die transferierte Energiemenge kann zumindest einen Teil der und bevorzugt die gesamte Kompensations-Energiemenge ausmachen, die während zumindest einem Vorgang der Erbringung von Regelleistung mit dem elektrischen Übertragungsnetz ausgetauscht wird.

Ein zweiter Haupt-Aspekt der vorliegenden Offenbarung, der für sich allein oder in Kombination mit den anderen Haupt-Aspekt genutzt werden kann, betrifft einen Zentralspeicher mit einer fremdkontrollierbaren Speichersektion, die durch gesteuerte Aufnahme oder Abgabe von Energie gegenüber dem elektrischen Übertragungsnetz ladbar und endladbar ist, wobei die Aufnahme oder Abgabe von Energie durch Fernsteuerung gemäß Einspeise- oder Ausspeiseanweisungen erfolgt, die über ein Kommunikations-Netzwerk empfangen werden.

Der Betrieb eines Zentralspeichers gemäß der vorliegenden Offenbarung kann durch ein Steuerungsverfahren erfolgen, das einen dritten Haupt-Aspekt darstellt, der für sich allein oder in Kombination mit den anderen Haupt-Aspekten genutzt werden kann.

Die Offenbarung betrifft weiterhin ein Energiefluss-Steuerungsverfahren für einen Netzanschluss an einem elektrischen Übertragungsnetz, von dem aus Einspeiseund/oder Ausspeiseanweisungen erzeugt werden, um die Fernsteuerung für die fremdkontrollierbare Speichersektion zu bewirken. Das Energiefluss-Steuerungsverfahren und eine dieses Verfahren ausführende Energieflusssteuerung stellen ebenfalls separate Haupt-Aspekte der Offenbarung dar, die für sich allein oder in Kombination mit jedem der anderen Haupt-Aspekte nutzbar sind.

Die eigenkontrollierte Speichersektion des Zentralspeichers weist eine Speicherkapazität auf, die mindestens einer Kompensations-Energiemenge entspricht, die während zumindest eines Vorgangs der Erbringung von Regelleistung mit dem Übertragungsnetz ausgetauscht wird. Es ist insbesondere vorgesehen, dass das Verhältnis der Speicherkapazität der eigenkontrollierten Speichersektion (in MWh - Megawatt-Stunden) zu der Leistung, die maximal für die Erbringung von Primär-Regelleistung aufzunehmen oder abzugeben ist, (in MW - Megawatt) größer eins ist, bevorzugt deutlich größer als eins. Die fremdkontrollierbare Speichersektion umfasst eine weitere Speicherkapazität, die zusätzlich zu der Speicherkapazität der eigenkontrollierten Speichersektion vorhanden ist.

Das Vorhalten von zwei Speichersektionen, zwischen denen ein Ladungstransfer stattfinden kann, um einen Ist-Ladezustand der eigenkontrollierten Speichersektion einem Soll-Ladezustand anzunähern, hat verschiedene Vorteile. Einerseits bestehen für die Energiespeichereinheiten (Batterien), die der eigenkontrollierten Speichersektion zugeordnet sind hohe technische Anforderungen. Für die Erbringung von Regelleistung, insbesondere von Primär-Regelleistung, müssen von einer solchen Energiespeichereinheit in sehr kurzer Zeit hohe Ströme aufgenommen oder abgegeben werden, wobei der Stromfluss über eine lange Zeitdauer auf einem konstanten Niveau bleiben muss. Hierfür eignen sich nur bestimmte elektrische Speichertypen, die regelmäßig gewartet oder instand gesetzt werden müssen. Elektrische Speichereinheiten, die solche hohen Anforderungen erfüllen, werden in der vorliegenden Offenbarung als Hochdynamik-Speichereinheiten bezeichnet.

In einer fremdkontrollierbaren Speichersektion können hingegen wesentlich geringere Anforderungen an die Qualität und/oder Belastbarkeit einer Energiespeichereinheit gestellt sein. Dementsprechend sind in der fremdkontrollierbaren Speichersektion Niederdynamik-Speichereinheiten verwendbar.

Ein Zentralspeicher, der keine fremdkontrollierbare Speichersektion aufweist, muss seinen Arbeitspunkt (Ist-Ladezustand) bei Annäherung an eine Toleranzgrenze über einen Energie-Austausch mit dem Übertragungsnetz verändern. dieser Energie-Austausch kann bzw. darf nicht in zeitlicher Überschneidung mit einem Vorgang zur Erbringung von Regelleistung stehen. Also kann ein solcher Zentralspeicher nur in zeitlich getrennten Phasen entweder Regelleistung erbringen oder bei sehr viel geringeren Leistungen den Arbeitspunkt verändern. Dies führt zu einer beschränkten Verfügbarkeit der Regelleistung.

Gemäß der vorliegenden Offenbarung kann zwischen oder während Vorgängen der Erbringung von Regelleistung ein Ladungstransfer zwischen den Speichersektionen stattfinden, der als Binnen-Transfer innerhalb des Zentralspeichers abläuft und somit ohne Auswirkung auf das Übertragungsnetz bleibt. Somit ist es möglich, durch einen Rückgriff auf die elektrische Ladung in der fremdkontrollierbaren Speichersektion den Arbeitspunkte bzw. Ist-Ladezustand der eigenkontrollierten Speichersektion schneller und bei geringeren Kosten zu verändern. Es ist insbesondere nicht oder seltener erforderlich, den Ist-Ladezustand ausschließlich über sogenannte Fahrplangeschäfte zu verändern, d.h. den Austausch von elektrischer Ladung mit einem externen Teilnehmer durch eine Handelsgeschäft und bei beschränkter Leistung (Strom pro Zeit).

Die fremdkontrollierbare Speichersektion kann über einen ferngesteuerten Zentralspeicher-Energiefluss mit dem Übertragungsnetz Energie austauschen. Sie kann insbesondere durch eine gesteuerte Aufnahme von Energie geladen und über eine gesteuerte Abgabe von Energie entladen werden. Die Aufnahme oder Abgabe von Energie erfolgt durch Fernsteuerung gemäß Einspeise- oder Ausspeiseanweisungen, die über ein Kommunikations-Netzwerk empfangen werden. Die Anweisungen stammen bevorzugt von entfernten Anschlussteilnehmern bzw. Netzanschlüssen an dem elektrischen Übertragungsnetz. An solchen entfernten Netzanschlüssen können insbesondere lokale Energieerzeuger auf Basis erneuerbarer Energien betrieben sein, wie beispielsweise Anlagen zur Nutzung von Windkraft oder Photovoltaik. Ein Anschlussteilnehmer bzw. der Betreiber eines Netzanschlusses kann die Fernsteuerung nutzen, um eine momentan erzeugte Energiemenge, die dem elektrischen Übertragungsnetz als Teilnehmer-Energiefluss zugeführt wird, in eine Teilkapazität der fremdkontrollierbaren Speichersektion zu übertragen, in dem der Zentralspeicher angewiesen wird, einen zu dem Teilnehmer-Energiefluss entsprechenden und ferngesteuerten Zentralspeicher-Energiefluss aufzunehmen. Mit anderen Worten kann in gesteuerter Weise eine Energiemenge, die zu einem bestimmten Zeitpunkt oder in einem bestimmten Zeitintervall aus einer erneuerbaren Energie bereitgestellt wird, zielgerichtet in die fernsteuerbare Speichersektion übertragen werden, wobei in abgestimmter Weise für das elektrische Übertragungsnetz ein Lastausgleich zwischen dem Teilnehmer-Energiefluss und dem zugeordneten Anteil des ferngesteuerten Zentralspeicher-Energieflusses stattfindet. Die Menge an Energie, die dem Übertragungsnetz momentan an dem Netzanschluss zugeführt wird, wird dem Übertragungsnetz am Zentralspeicher im Wesentlichen gegengleich entnommen. In dem Zeitpunkt oder Zeitintervall wird die zugeführte Energie zum Übertragungsnetz durch entnommene Energie ausgeglichen. Somit führt die Einspeisung dieser Energiemenge von einer Windkraftanlage oder Photovoltaikanlage nicht zu einem momentanen Überschuss an eingespeister Energie und sie trägt damit nicht zu einer Destabilisierung der Netzfrequenz bei. Dementsprechend wird durch die Fernsteuerung ein aktiver Lastausgleich bewirkt, der den Bedarf für die Erbringung für Regelleistung reduziert.

Darüber hinaus ist es nicht erforderlich, an dem Netzanschluss einen lokalen Energiespeicher vorzusehen, um eine überschüssige Energiemenge vollständig aufzunehmen. Wenn an einem Netzanschluss ein lokaler Energiespeicher vorliegt, kann dieser allerdings bei weit geringerem Kapazitätsbedarf zum kurzfristigen Puffern des Teilnehmer-Energieflusses genutzt werden, sodass dieser mit einer Zeitverzögerung gegenüber dem elektrischen Übertragungsnetz wirksam wird.

Im umgekehrten Übertragungssinne kann durch den Netzanschluss eine ferngesteuerte Abgabe von Energie von der fremdkontrollierbaren Speichersektion in das Übertragungsnetz angewiesen werden (ebenfalls als Anteil am ferngesteuerten Zentralspeicher-Energiefluss), die mit einer entsprechenden Entnahme von Energie aus dem Übertragungsnetz als Teilnehmer-Energiefluss korrespondiert. Ein Anschlussteilnehmer kann über seine zuvor eingespeicherte elektrische Energie also per Fernsteuerung verfügen, um sie zu einem Zeitpunkt mit erhöhtem Strombedarf zu seinem Netzanschluss zurück zu transferieren, bspw. wenn die erneuerbaren Energien (Wind, Sonnenstrahlung) gerade nicht zur Verfügung stehen. Auch in diesem Fall findet ein aktiver Lastausgleich für das Übertragungsnetz statt, denn die Energiemenge, die zu einem bestimmten Zeitpunkt bzw. in einem bestimmten Zeitintervall per Fernsteuerung über den ferngesteuerten Zentralspeicher-Energiefluss dem elektrischen Übertragungsnetz zugeführt wird, wird durch eine entsprechende Energiemenge kompensiert, die dem Übertragungsnetz als Teilnehmer-Energiefluss entnommen wird.

Mit anderen Worten kann durch die Fernsteuerung in beiden Richtungen der Energieübertragung ein aktiver Lastausgleich erfolgen, durch den ein momentaner Überschuss oder Mangel an elektrischer Energie an einem Netzanschluss durch eine korrespondierende Einspeicherung oder Ausspeicherung am Zentralspeicher ausgeglichen wird.

Weitere vorteilhafte Ausbildungen der Erfindung sind in der nachfolgenden detaillierten Beschreibung, den beigefügten Zeichnungen sowie den Ansprüchen angegeben.

Die Erfindung ist in der Zeichnung beispielhaft und schematisch dargestellt. Es zeigt:

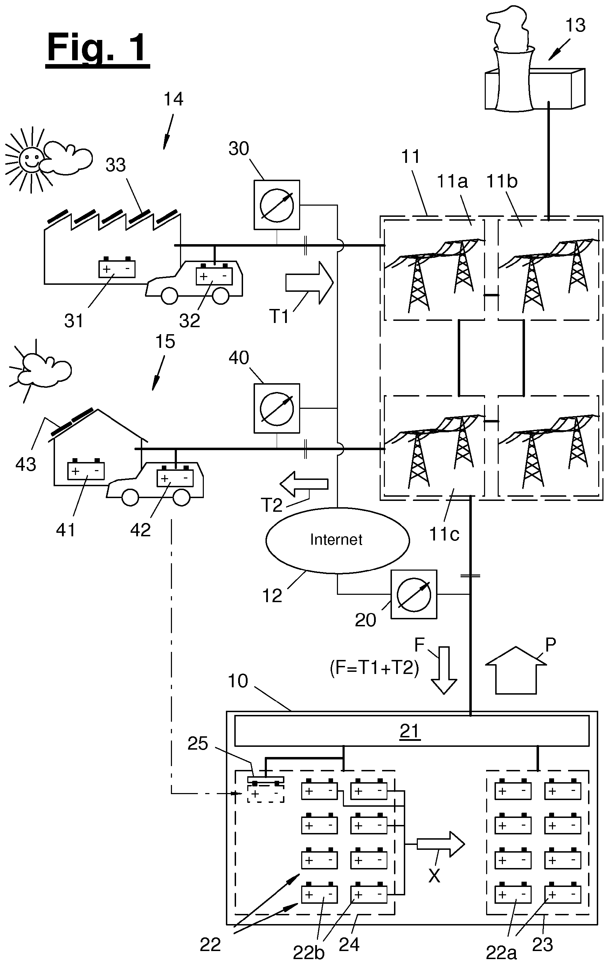

- Figur 1:: Eine Schemadarstellung eines elektrischen Übertragungsnetzes, an das ein Zentral-Energiespeicher, mehrere Anschlussteilnehmer sowie ein Haupt-Energieversorger angeschlossen sind.

Figur 1 illustriert in einer schematischen Übersicht den Aufbau eines Zentralspeichers (10) sowie verschiedene Energieflüsse (T1, T2, F, P), die einem elektrischen Übertragungsnetz (11) zugeführt oder entnommen werden. Der Zentralspeicher (10) ist an ein elektrisches Übertragungsnetz (11) angeschlossen.

Das elektrische Übertragungsnetz (11) kann aus zwei oder mehr Teilnetzen (11a bis 11d) bestehen. Ein Teilnetz (11a bis 11d) kann beispielsweise mit einem sogenannten Bilanzkreis korrespondieren, der von einem Übertragungsnetzbetreiber verwaltet wird. In dem Übertragungsnetz (11) bzw. den Teilnetzen (11a bis 11d) wird eine Spannungs- bzw. Frequenzstabilisierung durch Lastausgleich vorgenommen, indem Regelleistung erbracht wird. Wenn in dem Übertragungsnetz (11) momentan deutlich mehr Energie entnommen als zugeführt wird, also in der Bilanz ein Energiemangel vorliegt, fällt die Netzfrequenz gegenüber der Soll-Frequenz ab. Wird hingegen momentan mehr Energie zugeführt als entnommen, d.h. wenn in der Bilanz ein Energieüberschuss vorliegt, steigt die Netzfrequenz über die Soll-Frequenz hinaus an. Die Soll-Frequenz beträgt in der Regel 50,00 Hz (Hertz). Bei einer Abweichung der momentanen Netzfrequenz von der Soll-Frequenz um mehr als einen Toleranz-Schwellenwert (bspw. +/- 200 mHz (Milli Hertz)), wird in der Regel mit der Erbringung von Regelleistung eingesetzt, um die Spannungsqualität zu erhöhen und die Netzfrequenz zu stabilisieren.

Nachfolgend wird aus Gründen der Einfachheit nicht mehr zwischen dem Übertragungsnetz (11) und den Teilnetzen (11a bis 11d) unterschieden.

An dem Übertragungsnetz (11) kann eine große Zahl von Anschlussteilnehmern angebunden sein, für die hier rein beispielhaft ein erster Anschlussteilnehmer (14) und ein zweiter Anschlussteilnehmer (15) dargestellt sind. Jeder Anschlussteilnehmer (14, 15) ist über mindestens einen Netzanschluss mit dem Übertragungsnetz verbunden. Der Netzanschluss trägt in Figur 1 keine Bezugsziffer und ist durch zwei schmale parallele Linien symbolisiert. In der Regel ist mindestens ein Stromzähler vorgesehen, der über einen Netzanschluss gegenüber dem Übertragungsnetz (11) eingespeiste oder entnommene Strommengen zählt. Die Stromzählung kann als Momentan-Zählung (Wattstunde pro Sekunde) oder als Intervallzählung (beispielsweise Kilowattstunden pro Tag, Monat oder Jahr) erfolgen. Wenn einem Anschlussteilnehmer (14, 15) mehrere Netzanschlüsse zugeordnet sind, kann für diese jeweils ein separater oder ein gemeinsamer Stromzähler vorgesehen sein.

Nachfolgend wird vereinfachend davon ausgegangen, dass für den ersten Anschlussteilnehmer (14) sowie den zweiten Anschlussteilnehmer (15) je genau ein Netzanschluss vorliegt. Ein Anschlussteilnehmer (14, 15) kann gegenüber dem Übertragungsnetz (11) ein reiner Konsument oder ein reiner Produzent von Strom sein. Alternativ kann ein Anschlussteilnehmer bezogen auf einen Netzanschluss abwechselnd Produzent und Konsument sein (auch als "Prosumer" bezeichnet).

Der Großteil der elektrischen Energie, die von den Anschlussteilnehmern (14, 15) bzw. an den Netzanschlüssen verbraucht wird, wird dem Übertragungsnetz (11) durch einen oder mehrere Hauptenergieversorger (13) zugeführt. Hierzu gehören insbesondere Kraftwerke.

Bei einigen Anschlussteilnehmern (14, 15) können ein oder mehrere lokale Energieerzeuger (33, 43) vorliegen, für die hier repräsentativ jeweils eine PhotovoltaikAnlage bei dem ersten und zweiten Anschlussteilnehmer (14, 15) dargestellt ist. Bei diesen Energieerzeugern (33, 43) kann es sich insbesondere um Systeme handeln, die Strom aus erneuerbaren Energien bereitstellen, also insbesondere aus Sonnenstrahlung und Wind.

Die Verfügbarkeit erneuerbarer Energien und damit die Verfügbarkeit von daraus erzeugtem elektrischen Strom ist schlecht regelbar. Dementsprechend wird durch die Einspeisung von Strom aus erneuerbaren Energien vergleichsweise häufig ein momentaner Energieüberschuss für das Übertragungsnetz (11) erzeugt, der tendenziell eine Steigerung der Netzfrequenz bewirkt, die durch eine negative Regelleistung (Entnahme von Strom aus dem Übertragungsnetz) auszugleichen ist, andererseits kann bei einem plötzlichen Wegfall der Einspeisung von Strom aus erneuerbaren Energien, beispielsweise durch eine Wetteränderung, in sehr kurzer Zeit ein Mangel an bereitgestellter Energie für das Übertragungsnetz (11) entstehen, der tendenziell einen Abfall der Netzfrequenz bewirkt und durch positive Regelleistung auszugleichen ist (Zugabe von Strom aus dem Übertragungsnetz).

In dem Beispiel von Figur 1 wird positive Regelleistung durch den Zentralspeicher (10) erbracht. Der Zentralspeicher (10) verfügt über eine eigenkontrollierte Speichersektion (23), der mehrere Energiespeichereinheiten (22) zugeordnet sind. Es kann sich insbesondere um Hochdynamik-Speicherzellen (22a) handeln, die direkt oder mittelbar für die Erbringung von Primär-Regelleistung präqualifizierbar sind. Die Speicherkapazität der eigenkontrollierten Speichersektion (23) beträgt bevorzugt mehr als 1 MWh (eine Megawattstunde), insbesondere mehrere Megawattstunden. Die maximale Leistung, die mit dem Übertragungsnetz (11) bei der Erbringung von Regelleistung ausgetauscht wird, beträgt bevorzugt mindestens 1 MW (ein Megawatt), insbesondere mehrere Megawattstunden. Die Kapazität und die maximale Leistung können ggfs. durch Ergänzung oder Entfernung von elektrischen Speichereinheiten (22, 22a) veränderbar sein.

Der Zentralspeicher (10) umfasst eine Energieflusssteuerung (20), die bevorzugt eine momentane Netzfrequenz des Übertragungsnetzes (11) erfasst und gemäß den Vorgaben für die Erbringung von Regelleistung innerhalb einer Mindest-Reaktionszeit einen Regelleistungs-Energiefluss (P) erzeugt, nachdem eine bestimmte Abweichung der gemessenen Netzfrequenz von einer Soll-Netzfrequenz festgestellt ist. Durch den Regelleistungs-Energiefluss (P) wird eine Kompensations-Energiemenge zwischen der eigenkontrollierten Speichersektion (23) und dem Übertragungsnetz (11) ausgetauscht, welche die Rückführung der momentanen Netz-Frequenz zur Soll-Frequenz begünstigt. Bei der Erbringung von positiver Regelleistung wird der eigenkontrollierten Speichersektion (23) Energie entnommen, sodass der Ladestand sinkt. Bei der Erbringung negativer Regelleistung wird der eigenkontrollierten Speichersektion (23) Energie zugeführt, sodass der Ladestand zunimmt.

Der Zentralspeicher (10) umfasst weiterhin eine fremdkontrollierbare Speichersektion (23), der ebenfalls mehrere Energiespeichereinheiten (22) zugeordnet sind. Es kann sich insbesondere um im Vergleich zu den Hochdynamik-Speicherzellen (22a) schwächer ausgelegte (normale) Speicherzellen (22b) bzw. Niederdynamik-Speicherzellen handeln.

Gemäß einer alternativen Ausführung können die Energiespeichereinheiten (22) in beiden Speichersektionen (23, 24) von derselben Art sein, nämlich Hochdynamik-Speicherzellen (22a).

Die Zuordnung einer Energiespeichereinheit (22) zu einer Speichersektion (23, 24) kann permanent oder veränderbar sein. Zur Bereitstellung eines Ladungstransfers (X) zwischen den Speichersektionen (23, 24) wird die Zuordnung einer oder mehrerer Energiespeichereinheiten zu den Speichersektionen (23, 24) geändert.

Gemäß einer bevorzugten Ausführung kann der Zentralspeicher (10) einen oder mehrere Adapter (25) aufweisen, an die Energiespeichereinheiten von externen Betreibern anschließbar sind. Es kann sich insbesondere um einen Adapter für den Anschluss eines wiederverwendeten oder weiterverwendeten Haupt-Energiespeichers eines Fahrzeugs (32, 42) handeln. Ein solcher Haupt-Energiespeicher (32, 42) eines Fahrzeugs kann insbesondere von einem Anschlussteilnehmer (14, 15) bereitgestellt werden, wenn er für den Fahrbetrieb eines Fahrzeugs nicht mehr die erforderliche Restkapazität oder Belastbarkeit aufweist.

Der Zentralspeicher (10) umfasst zumindest eine Ladesteuerung (21), die direkt oder indirekt mit einem öffentlichen Kommunikations-Netzwerk (12), insbesondere dem Internet verbunden ist. Die Ladesteuerung (21) ist dazu ausgebildet, Einspeise- und Ausspeiseanweisungen zu empfangen und auszuwerten, nach denen ein ferngesteuerter Zentralspeicher-Energiefluss (F) erzeugt wird, über den elektrische Energie zwischen der fremdkontrollierbaren Speichersektion (23) und dem elektrischen Übertragungsnetz (11) ausgetauscht wird.

Eine Einspeise- oder Ausspeiseanweisung kann beliebig formuliert sein und beliebige Informationen beinhalten. Gemäß einer bevorzugten Ausführung beinhaltet eine Einspeise- oder Ausspeiseanweisung eine explizite oder implizite Information über einen Teilnehmer-Energiefluss (T1, T2) der mit dem elektrischen Übertragungsnetz (11) von einem entfernten Anschlussteilnehmer bzw. an einem entfernten Netzanschluss (14, 15) zu einem bestimmten Zeitpunkt oder in einem bestimmten Zeitintervall ausgetauscht wird oder ausgetauscht werden soll, wobei der Zentralspeicher (10) angewiesen wird, den ferngesteuerten Zentralspeicher-Energiefluss (F) so zu steuern, dass der Teilnehmer-Energiefluss (T1, T2) in Bezug auf das Übertragungsnetz (11) kompensiert wird. Die Kompensation kann teilweise oder vollständig erfolgen.

Es kann insbesondere durch eine oder mehrere Anweisungen ein Übertragungsplan mitgeteilt oder verhandelt werden, in dem für mehrere Zeitintervalle festgelegt wird, welcher ferngesteuerte Zentralspeicher-Energiefluss (F) erzeugt werden soll und/oder welche Teilnehmer-Energieflüsse zu kompensieren sind.

In dem Beispiel von Figur 1 wird zu dem dargestellten Zeitpunkt oder Zeitintervall an dem ersten Teilnehmeranschluss (14) ein erster Teilnehmer-Energiefluss (T1) dem Übertragungsnetz (11) zugeführt. An einem zweiten Teilnehmeranschluss (15) wird ein zweiter Teilnehmer-Energiefluss (T2) dem Übertragungsnetz (11) entnommen. Der Umfang des ersten Teilnehmer-Energieflusses (T1) ist größer als der Umfang des zweiten Teilnehmer-Energieflusses (T2), was durch unterschiedlich breite Pfeile dargestellt ist. Es wird beispielhaft angenommen, dass an beiden Teilnehmer-Anschlüssen (14, 15) eine vollständige Kompensation des jeweiligen Teilnehmer-Energieflusses (T1, T2) angestrebt wird. Dementsprechend wird von dem ersten Teilnehmeranschluss (14) eine Einspeiseanweisung an den Zentralspeicher (10) bzw. die Ladestandsteuerung (21) gesendet, die explizit oder implizit angibt, welchen Umfang und welche Flussrichtung des ersten Teilnehmer-Energieflusses (T1) hat oder haben soll. Durch die Einspeise- oder Ausspeiseanweisung wird der Zentralspeicher (10) bzw. die fremdkontrollierbare Speichersektion (24) angewiesen, eine entsprechende Energiemenge aus dem Übertragungsnetz (11) aufzunehmen.

Parallel wird von dem zweiten Anschlussteilnehmer (15) bzw. zweiten Netzanschluss eine Ausspeise-Anweisung an den Zentral-Energiespeicher (10) bzw. die Ladestandsteuerung (21) versendet, welche explizit oder implizit angibt, welchen Umfang und welche Richtung der zweite Teilnehmer-Energiefluss (T2) hat oder haben soll. Durch diese AusspeiseAnweisung wird der Zentral-Energiespeicher (10) bzw. die fremdkontrollierbare Speichersektion (24) angewiesen, eine in Umfang und Richtung entsprechende Menge an Energie dem Übertragungsnetz (11) zuzuführen.

In dem Beispiel von Figur 1 ergibt sich der momentane tatsächliche Zentralspeicher-Energiefluss (F) als Summe derjenigen Energieflüsse, die von dem ersten Anschlussteilnehmer (14) und dem zweiten Anschlussteilnehmer (15) per Fernsteuerung angewiesen worden sind. Der ferngesteuerte Zentralspeicher-Energiefluss kann in Folge dessen ein Netto-Energiefluss sein, der der Summe mehrerer Einspeise- und AusspeiseAnweisungen entspricht.

Durch die in Bezug auf einen Zeitpunkt oder ein Zeitintervall ausgeglichene bzw. gegenkompensierte Zuführung und Entnahme von elektrischer Energie zu und von dem Übertragungsnetz (11) wird ein aktiver Lastausgleich bewirkt. In dem Maße, in dem durch Fernsteuerung kompensierende Energieflüsse (F) an dem Zentralspeicher (10) erzeugt werden, tragen die zugeordneten (kompensierten) Teilnehmer-Energieflüsse (T1, T2) nicht mehr zu der Frequenz-Destabilisierung bei, welche die Erbringung von Regelleistung erforderlich macht. Demensprechend wird der Gesamtbedarf an Regelleistung verringert.

Die Fernsteuerung kann einseitig gerichtet sind, in dem Sinne, dass von einem Teilnehmeranschluss einseitig vorgegeben wird, welcher ferngesteuerte Zentralspeicher Energiefluss stattfinden soll. Einer solchen Anweisung kann durch die Ladestandsteuerung (im Rahmen der physikalischen Grenzen) direkt Folge geleistet werden.

Alternativ kann die Fernsteuerung eine gegenseitige Abstimmung vorsehen, die durch ein beliebiges Kommunikationsschema umsetzbar ist. Beispielsweise kann eine Einspeise- oder Ausspeise-Anweisung eine Soll-Vorgabe für einen ferngesteuerten Zentralspeicher-Energiefluss enthalten. Mit anderen Worten kann eine Soll-Vorgabe darüber gemacht werden, in welchem Umfang und in welcher Richtung zu einem bestimmten Zeitpunkt oder Zeitintervall ein Teilnehmer-Energiefluss auftreten soll, der durch einen entsprechenden ferngesteuerten Zentralspeicher-Energiefluss zu kompensieren ist. Am Zentralspeicher, insbesondere in der Ladestandsteuerung, können eine oder mehrere solcher Soll-Vorgaben geprüft werden. Die Prüfung kann beliebige Parameter berücksichtigen, darunter insbesondere:
- physikalische Grenzen der Kapazität der fremdkontrollierbaren Speichersektion oder einer daraus zugewiesenen Teilkapazität;
- zeitabhängige Kosten für den Transfer eines Stroms durch das öffentliche Übertragungsnetz bzw. zeitabhängige Kosten für eine Einspeisung oder Ausspeisung;
- Erreichen oder Überschreiten vorgegebener Grenzladestände der fremdkontrollierbaren Speichersektion oder einer daraus zugewiesenen Teilkapazität.

In Abhängigkeit von dem Prüfungsergebnis kann an dem Zentralspeicher entschieden werden, ob und in welchem Umfang die Soll-Vorgabe erfüllt wird, d.h. zu welchem Anteil tatsächlich ein ferngesteuerter Zentralspeicher-Energiefluss erzeugt wird, der mit dem Teilnehmer-Energiefluss gemäß der Anfrage korrespondiert.

Alternativ oder zusätzlich kann von dem Zentralspeicher, insbesondere von der Ladestandsteuerung, eine Benachrichtigung an einen Anschluss-Teilnehmer (14, 15) versendet werden, in der mitgeteilt wird, ob und zu welchem Anteil der Einspeise- oder Ausspeise-Anweisung Folge geleistet wird oder Folge geleistet werden wird. Eine solche Benachrichtigung kann alternativ oder zusätzlich einen Gegen-Vorschlag für eine Soll-Vorgabe enthalten.

Mit anderen Worten kann über einen ein- oder mehrstufigen Austausch von Einspeiseund Ausspeise-Anweisungen einerseits und Benachrichtigungen andererseits der oben erwähnte Übertragungsplan ermittelt oder ausgehandelt werden.

Gemäß einer bevorzugten Ausführung kann ein tatsächlich gegenüber dem Übertragungsnetz zu einem bestimmten Zeitpunkt wirksamer Teilnehmer-Energiefluss steuerbar oder regelbar sein, insbesondere durch Pufferung eines ermittelten oder geplanten Teilnehmer-Energieflusses. Die Steuerung oder Regelung des wirksamen Teilnehmer-Energieflusses kann bevorzugt in Abhängigkeit von einer Benachrichtigung erfolgen, die an oder für einen Anschlussteilnehmer (14, 15) von dem Zentralspeicher (10) bzw. der Ladestandsteuerung empfangen wird.

In dem bisherigen Beispiel wird davon ausgegangen, dass ein Teilnehmer-Energiefluss (T1, T2) und ein zugehöriger ferngesteuerter Zentralspeicher-Energiefluss mit im Wesentlichen gleichem Umfang erzeugt werden, d.h. dass eine vollständige Kompensation erfolgt.

Alternativ zu dem obigen Beispiel kann eine Teilkompensation durch einen ferngesteuerten Zentralspeicher-Energiefluss (F) angestrebt werden. In einem solchen Fall kann eine Einspeise- oder Ausspeiseanweisung eine Information über einen solchen Teilnehmer-Energiefluss (T1, T2) beinhalten, der als Anteil an einem Gesamt-Energiefluss kompensiert werden soll, der über einen Netzanschluss mit dem Übertragungsnetz (11) ausgetauscht wird.

Der Ladestand an dem Zentralspeicher (10) und insbesondere in der fremdkontrollierbaren Speichersektion (24) kann auf beliebige Weise gesteuert bzw. geregelt werden. Bevorzugt wird ein Steuerungsverfahren gemäß der vorliegenden Offenbarung ausgeführt. Dieses umfasst die folgenden Schritte, die in beliebiger Reihenfolge und bevorzugt in der angegebenen Reihenfolge ausführbar sind.

Teilkapazitäten der fremdkontrollierbaren Speichersektion (24) des Zentralspeichers (10) werden Ladestandkonten zugewiesen, die von entfernten Anschlussteilnehmern (14,15) steuerbar sind. Die Zuweisung kann auf beliebige Weise erfolgen. Gemäß einer ersten Variante kann eine vollständige Energiespeichereinheit (22, 22b) einem Ladestandkonto zugewiesen werden, so dass eine direkte Fernsteuerbarkeit für einen physikalischen Energiespeicher erzeugt wird. Insbesondere kann ein weiter- oder wiederverwendeter elektrischer Haupt-Energiespeicher (32, 42), der über einen Adapter (25) an die fremdkontrollierbare Speichersektion (24) angebunden ist, direkt und vollständig einem Ladestandkonto zugewiesen werden. Dies kann insbesondere dasjenige Ladestandkonto sein, das dem Inhaber dieses Haupt-Energiespeichers zugewiesen ist. Alternativ können anteilige oder vollständige Kapazitäten aus zwei oder mehr Energiespeichereinheiten (22, 22b) in beliebiger Kombination auf ein oder mehrere Ladestandkonten verteilt zugewiesen werden. Mit anderen Worten kann eine Teilkapazität, die einem Ladestandkonto zugewiesen ist, eine physikalisch festgelegte Teilkapazität oder eine lediglich logische Teilkapazität sein.

Mit anderen Worten ist für ein Ladestandkonto bevorzugt lediglich festgelegt, wie groß die zugewiesene logische Teilkapazität ist und für diese Teilkapazität kann ein momentaner Ladestand ausgewiesen und gesteuert werden. Die logische Teilkapazität und deren Ladestand können sich aber physikalisch auf beliebige Weise auf einen oder mehrere Energiespeichereinheiten (22, 22b) verteilen. Ferner sind Mischungen von physikalischer Zuweisung und rein logischer Zuweisung von Teilkapazitäten möglich.

In dem Steuerungsverfahren werden eine oder mehrere Einspeise- oder Ausspeiseanweisungen für mindestens eines der Ladestandkonten bzw. die zugewiesenen Teilkapazitäten empfangen. Der Empfang solcher Anweisungen kann zu beliebigen Zeitpunkten oder gemäß einem vereinbarten oder vorgegebenen Kommunikationsschema oder Kommunikationstakt erfolgen. Es kann weiterhin vorgegebene oder vereinbarte zeitliche Bezüge zwischen dem Zeitpunkt oder Zeitintervall des Empfangs einer Anweisung und Zeitpunkt oder Zeitintervall der Umsetzung in einer entsprechend gesteuerten Einspeisung oder Ausspeisung geben.

Ein Energiefluss von oder zu der fremdkontrollierbaren Speichersektion (24) (ferngesteuerter Zentralspeicher-Energiefluss F) wird gemäß der mindestens einen Einspeise- oder Ausspeiseanweisung unter entsprechender Ladung oder Entladung der zugewiesenen Teilkapazität gesteuert.

In dem Beispiel von Figur 1 führt die von dem ersten Anschlussteilnehmer (14) versendete Einspeiseanweisung zu einer Ladung derjenigen Teilkapazität, die dem Ladestandkonto des ersten Anschlussteilnehmers (14) zugewiesen ist. Die von dem zweiten Anschlussteilnehmer (15) versendete Ausspeiseanweisung führt entsprechend zu einer Entladung derjenige Teilkapazität, die dem Ladestandkonto des zweiten Anschlussteilnehmers (15) zugewiesen ist.

Das Versenden von Einspeise- oder Ausspeiseanweisungen kann bevorzugt in Abstimmung mit dem momentanen Ladezustand einer Teilkapazität erfolgen, die dem jeweiligen Anschlussteilnehmer (14, 15) zugeordnet ist. Beispielsweise kann die Befolgung einer Ausspeiseanweisung verweigert werden, wenn die dem jeweiligen Anschlussteilnehmer zugewiesene Teilkapazität einen unzureichenden Ladestand aufweist. Entsprechend kann eine Einspeisung verweigert werden, wenn die zugewiesene Teilkapazität vollständig ausgeschöpft ist. Darüber hinaus kann es weitere Beschränkungen für die Befolgung von Einspeise- oder Ausspeiseanweisungen geben. bspw. vereinbarte Grenzwerte oder Grenzleistungen.

Gemäß einer bevorzugten Variante kann für ein Ladestandkonto durch Fernsteuerung (einseitig oder gegenseitig verhandelt) festlegbar sein, ob und ggfs. in welchem Umfang von der dem Ladestandkonto zugewiesenen Teilkapazität ein Ladungstransfer (X) zu der eigenkontrollierten Speichersektion (23) erfolgen darf. Ein solcher Ladungstransfer (X) kann beispielsweise bedarfsgerecht von der eigenkontrollierten Speichersektion (23) gegenüber der fremdkontrollierbaren Speichersektion (24) bzw. der Ladestandsteuerung angefragt werden. Die Anfrage kann insbesondere erfolgen, um einen Ist-Ladezustand der eigenkontrollierten Speichersektion (23) einem Soll-Ladezustand anzunähern, insbesondere um durch einen Binnen-Ladungstransfer innerhalb des Zentralspeichers (10) einen Arbeitspunkt der eigenkontrollierten Speichersektion zu verändern.

Weiterhin kann durch Fernsteuerung festlegbar sein, welche maximale Energiemenge für einen solchen Ladungstransfer (X) in Bezug auf ein bestimmtes Ladestandkonto transferiert werden darf. Die Energiemenge kann relativ oder absolut festgelegt sein. Als Bezugsgröße für eine relative Festlegung können beispielsweise die Größe der zugewiesenen Teilkapazität oder der momentane Ladestand der Teilkapazität dienen.

Die Erzeugung von Einspeise- und Ausspeiseanweisungen kann auf beliebige Weise und durch beliebige Mittel erfolgen. Bevorzugt wird von einem Anschlussteilnehmer (14, 15) bzw. an einem Netzanschluss ein Energiefluss-Steuerungsverfahren gemäß der vorliegenden Offenbarung ausgeführt. Das Verfahren kann insbesondere durch eine Energieflusssteuerung (30, 40) ausgeführt werden, die an dem Netzanschluss (14, 15) vorliegt. Alternativ kann das Verfahren durch ein Datenverarbeitungsgerät ausgeführt werden, das zumindest informationstechnischen Zugriff auf einen Netzanschluss und/oder eine Energieflusssteuerung (30, 40) hat.

An dem Netzanschluss (14, 15) werden zumindest ein Energieerzeuger (33, 43) und/oder zumindest ein Energieverbraucher betrieben. Das Energiefluss-Steuerungsverfahren umfasst bevorzugt die nachfolgenden Schritte, die in einer beliebigen Reihenfolge und bevorzugt in der angegebenen Reihenfolge ausführbar sind.

Es wird ein Teilnehmer-Energiefluss (T1, T2) ermittelt, der mit dem elektrischen Übertragungsnetz (11) an dem jeweiligen Netzanschluss (14,15) zu einem bestimmten Zeitpunkt oder in einem bestimmten Zeitintervall ausgetauscht wird oder ausgetauscht werden soll.

Der erfasste Teilnehmer-Energiefluss kann sein:
- ein momentan über einen Netzanschluss mit dem Übertragungsnetz (11) ausgetauschter Stromfluss, d.h. ein momentaner wirksamer Ist-Stromfluss;
- ein momentaner Stromfluss, der aus einem internen Netz des Anschlussteilnehmers (14, 15) gegenüber einem Pufferspeicher vorliegt, wobei durch den Pufferspeicher ein gegenüber dem Übertragungsnetz (11) abweichender wirksamer Stromfluss erzeugt sein kann, d.h. ein momentaner interner Ist-Stromfluss;
- ein zukünftiger Stromfluss, der über einen Netzanschluss mit dem Übertragungsnetz (11) ausgetauscht werden soll oder wird, d.h. ein zukünftiger Soll-Stromfluss.

Die Erfassung kann einen gesamten Stromfluss betreffen, der über einen Netzanschluss mit dem Übertragungsnetz (11) ausgetauscht wird. Alternativ kann die Erfassung einen solchen Teilnehmer-Energiefluss (T1, T2) betreffen, der als Anteil des gesamten Stromflusses durch Fernsteuerung eines Zentralspeicher-Energieflusses (F) kompensiert werden soll.

Die Erfassung kann auf beliebige Weise erfolgen. Beispielsweise ist es möglich, über einen Stromzähler den vollständigen Energieverbrauch und/oder die vollständige Energieerzeugung zu messen, die momentan im internen Netz des Anschlussteilnehmers vorliegt. Alternativ können der Energieverbrauch oder die Energieerzeugung von einzelnen lokalen Anlagen erfasst werden, woraus gegebenenfalls ein Summenwert gebildet wird, der als Erfassungswert dient. Die Erfassung kann den momentanen Energiefluss betreffen, der tatsächlich über den Netzanschluss mit dem Übertragungsnetz (11) ausgetauscht wird. Alternativ oder zusätzlich kann eine in die Zukunft gerichtete Erfassung eines prognostizierten oder steuerbaren Teilnehmer-Energieflusses erfolgen, der bei einem bekannten Zeitbezug mit dem Übertragungsnetz (11) vermutlich oder in gesteuerter Weise ausgetauscht wird.

In dem Energiefluss-Steuerungsverfahren wird eine Kommunikationsverbindung zu dem Zentralspeicher (10) bzw. der Ladestandsteuerung (21) hergestellt oder unterhalten, wo ein Ladestandkonto mit einer zugewiesenen und fernsteuerbaren Teilkapazität geführt ist. Die Kommunikationsverbindung erfolgt bevorzugt über ein öffentliches Kommunikations-Netzwerk (12), insbesondere das Internet.

In dem Energiefluss-Steuerungsverfahren wird weiterhin eine Einspeise- oder Ausspeiseanweisung erzeugt, die den Zentralspeicher (10) dazu anweist, eine Aufnahme oder Abgabe von Energie so zu steuern, dass der (mitgeteilte) Teilnehmer-Energiefluss in Bezug auf das Übertragungsnetz (11) durch einen ferngesteuerten Zentralspeicher-Energiefluss (F) kompensiert wird.

Gemäß einem optionalen Schritt kann der wirksame Teilnehmer-Energiefluss (T1, T2) in einem bestimmten Zeitpunkt oder Zeitintervall in Abhängigkeit von einer Benachrichtigung gesteuert oder geregelt werden, die von einem Zentralspeicher (10) bzw. einer Ladestandsteuerung (21) empfangen wird. Alternativ oder zusätzlich kann ein wirksamer Teilnehmer-Energiefluss (T1, T2) gemäß einem Übertragungsplan gesteuert oder geregelt werden, der von oder in Abstimmung mit dem Zentralspeicher (10) bzw. der Ladestandsteuerung (21) festgelegt ist.

Besonders vorteilhaft erfolgt der Lastausgleich in Bezug auf das Übertragungsnetz (11), wenn der Teilnehmer-Energiefluss (T1) und der zugehörige anteilige Zentralspeicher-Energiefluss (F) zueinander synchron und mit im Wesentlichen zu jedem Zeitpunkt identischem Umfang gesteuert oder geregelt werden, d.h. zueinander vollständig synchronisiert werden. Eine solche Synchronisierung kann auf beliebige Weise erfolgen. Gemäß einer bevorzugten Ausführungsvariante kann an dem Netzanschluss (14, 15) bzw. bei dem Anschlussteilnehmer zumindest zeitweise ein lokaler Energiespeicher (31, 32, 41, 42) verfügbar sein. Ein festgestellter momentaner Teilnehmer-Energiefluss (T1, T2) oder ein bevorstehender bzw. geplanter Teilnehmer-Energiefluss (T1, T2) kann in dem lokalen Energiespeicher zumindest anteilig gepuffert werden, so dass er mit einer zeitlichen Verzögerung gegenüber dem Übertragungsnetz (11) wirksam wird. Diese zeitliche Verzögerung kann insbesondere steuerbar oder regelbar sein.

Bevorzugt wird unter Nutzung der zeitlichen Verzögerung mit dem Zentralspeicher (10) der vorgenannte Übertragungsplan abgestimmt, so dass der nach der Pufferung tatsächlich wirksame Teilnehmer-Energiefluss (T1, T2) und der zugehörige ferngesteuerte Zentralspeicher-Energiefluss (F) zu jedem Zeitpunkt synchron mit dem Übertragungsnetz (11) ausgetauscht werden. Der Übertragungsplan kann insbesondere die durch Pufferung zu realisierende zeitliche Verzögerung vorgeben oder eine maximale Pufferungsdauer berücksichtigen.

Die für die Abstimmung des Energiefluss-Zeitplans erforderliche Dauer kann bevorzugt einige Millisekunden bis wenige Sekunden betragen. Gegebenenfalls können Abstimmungsintervalle vereinbart sein, zu denen wiederkehrend mitgeteilt wird, in welchem bevorstehenden Intervall welcher Umfang und welche Richtung eines (wirksamen) Teilnehmer-Energieflusses (T1, T2) auftreten werden. Die Länge solcher Intervalle und des Zeitbezugs zwischen Mitteilung und Ausführung können flexibel gewählt oder festgelegt sein, insbesondere in einem taktbasierten Kommunikationsschema.

Der für die Pufferung genutzte lokale Energiespeicher kann insbesondere ein mobiler Energiespeicher (32,42) sein, insbesondere ein elektrischer Haupt-Energiespeicher eines Fahrzeugs, während es mit dem Netzanschluss (14, 15) direkt oder indirekt verbunden ist. Beispielsweise kann ein elektrisches Fahrzeug, das an dem Netzanschluss (14, 15) zum Laden angeschlossen ist, während oder nach dem Ladevorgang für das Puffern des Teilnehmer-Energieflusses (T1, T2) mitbenutzt werden, so dass auf einen stationären lokalen Energiespeicher (31, 41) teilweise oder vollständig verzichtet werden kann. Dementsprechend ist eine Energieflusssteuerung (30, 40) an dem Netzanschluss (14, 15) bevorzugt mit einer Ladesteuerung für das elektrische Fahrzeug verbunden. Gemäß den vorgenannten kurzen Abstimmungszeiten und Pufferdauern kann es ausreichend sein, von dem mobilen Energiespeicher (32, 42) nur eine festgelegte Teilkapazität für das Puffern des Teilnehmer-Energieflusses (T1, T2) zu verwenden.

Abwandlungen der Erfindung sind in verschiedener Weise möglich.

Insbesondere können alle zu den Haupt-Aspekten gezeigten, beschriebenen oder beanspruchten Merkmale in beliebiger Weise miteinander kombiniert oder vertauscht werden.

### BEZUGSZEICHENLISTE

- 10: Zentralspeicher
- 11: Elektrisches Übertragungsnetz
- 11a: Erstes Teilnetz
- 11b: Zweites Teilnetz
- 11c: Drittes Teilnetz
- 11d: Viertes Teilnetz
- 12: Kommunikations-Netzwerk / Internet
- 13: Haupt-Energieversorger
- 14: Erster Anschlussteilnehmer / Netzanschluss
- 15: Zweiter Anschlussteilnehmer / Netzanschluss
- 20: Energieflusssteuerung Zentralspeicher
- 21: Ladestandsteuerung
- 22: Energiespeichereinheit
- 22a: Hochleistungs-Speicherzelle
- 22b: Normale Speicherzelle / wiederverwendeter elektrischer Haupt-Energiespeicher eines Fahrzeugs
- 23: Eigenkontrollierte Speichersektion
- 24: Fremdkontrollierbare Speichersektion
- 25: Adapter für Anschluss eines elektrischen Fahrzeug-Haupt-Energiespeichers
- 30: Energieflusssteuerung bei erstem Anschlussteilnehmer
- 31: Lokaler Energiespeicher stationär
- 32: Lokaler Energiespeicher mobil / zuschaltbar
- 33: Energieerzeuger / Photovoltaik / Windkraft
- 40: Energieflusssteuerung bei zweitem Anschlussteilnehmer
- 41: Lokaler Energiespeicher stationär
- 42: Lokaler Energiespeicher mobil / zuschaltbar
- 43: Energieerzeuger / Photovoltaik / Windkraft
- F: Ferngesteuerter Zentralspeicher-Energiefluss
- P: Regelleistungs-Energiefluss
- T1: Erster Teilnehmer-Energiefluss
- T2: Zweiter Teilnehmer-Energiefluss
- X: Ladungstransfer

## Patentansprüche

1. Zentralspeicher umfassend eine Mehrzahl an elektrischen Energiespeichereinheiten (22) und eine Energieflussteuerung (20), wobei der Zentralspeicher (10) an ein elektrisches Übertragungsnetz (11) angeschlossen und dazu ausgebildet ist, elektrische Energie aus dem Übertragungsnetz (11) gesteuert aufzunehmen und abzugeben, wobei
• die Energieflusssteuerung (20) dazu ausgebildet ist, zur Erbringung von Regelleistung für das Übertragungsnetz (11) einen Regelleistungs-Energiefluss (P) in das elektrische Übertragungsnetz (11) einzuspeisen oder aus dem Übertragungsnetz (11) zu entnehmen, wobei die Erbringung der Regelleistung innerhalb einer Mindest-Reaktionszeit erfolgt, nachdem eine bestimmte Abweichung einer gemessenen Netzfrequenz von einer Soll-Netzfrequenz festgestellt ist, und
• wobei der Zentralspeicher (10) eine eigenkontrollierte Speichersektion (23) aufweist, der mehrere Energiespeichereinheiten (22) der Mehrzahl an elektrischen Energiespeichereinheiten (22) zugeordnet sind, und eine fremdkontrollierbare Speichersektion (24) aufweist, der ebenfalls mehrere Energiespeichereinheiten (22) der Mehrzahl an Energiespeichereinheiten (22) zugeordnet sind, wobei die eigenkontrollierte Speichersektion (23) eine Speicherkapazität hat, die mindestens einer Kompensations-Energiemenge entspricht, die während eines Vorgangs der Erbringung von Regelleistung mit dem Übertragungsnetz ausgetauscht wird, und die fremdkontrollierbare Speichersektion (24) eine weitere Speicherkapazität hat, und
• wobei zwischen oder während Vorgängen der Erbringung von Regelleistung zwischen der eigenkontrollierten Speichersektion (23) und der fremdkontrollierbaren Speichersektion (24) ein Ladungstransfer (X) stattfindet,
**dadurch gekennzeichnet, dass**
der Ladungstransfer (X) mittels einer Änderung einer Zuordnung einer oder mehrerer Energiespeichereinheiten (22) zu den Speichersektionen (23, 24) stattfindet.

2. Zentralspeicher nach Anspruch 1, **dadurch gekennzeichnet , dass** der Zentralspeicher (10) eine fremdkontrollierbare Speichersektion (23) aufweist, die durch eine gesteuerte Aufnahme von Energie aus dem elektrischen Übertragungsnetz (11) oder gesteuerte Abgabe von Energie in das elektrische Übertragungsnetz (11) ladbar und entladbar ist (ferngesteuerter Zentralspeicher-Energiefluss F), wobei die Aufnahme oder Abgabe von Energie durch Fernsteuerung gemäß Einspeise- oder Ausspeiseanweisungen erfolgt, die über ein Kommunikations-Netzwerk (12) empfangen werden.

3. Zentralspeicher nach Anspruch 2, wobei die Einspeise- oder Ausspeiseanweisungen von entfernten Anschlussteilnehmern bzw. Netzanschlüssen (14, 15) an dem elektrischen Übertragungsnetz (11) erfolgen.

4. Zentralspeicher nach Anspruch 2 oder 3, wobei eine Einspeise- oder Ausspeiseanweisung eine Information über einen Teilnehmer-Energiefluss (T1, T2) beinhaltet, der mit dem elektrischen Übertragungsnetz (11) von dem entfernten Anschlussteilnehmer bzw. an dem entfernten Netzanschluss (14, 15) zu einem bestimmten Zeitpunkt oder in einem bestimmten Zeitintervall ausgetauscht wird, und wobei der ferngesteuerte Zentralspeicher-Energiefluss (F) so gesteuert wird, dass der Teilnehmer-Energiefluss (T1, T2) in Bezug auf das Übertragungsnetz (11) kompensiert wird.

5. Zentralspeicher nach einem der vorhergehenden Ansprüche, wobei der Zentralspeicher (10) einen oder mehrere Adapter aufweist, an die Energiespeichereinheiten (22) von externen Betreibern anschließbar sind, insbesondere einen Adapter für den Anschluss eines wiederverwendeten oder weiterverwendeten elektrischen Haupt-Energiespeichers eines Fahrzeugs (32, 42).

6. Zentralspeicher nach einem der vorhergehenden Ansprüche, wobei der Ladungstransfer (X) stattfindet, um einen Ist-Ladezustand der eigenkontrollierten Speichersektion (23) einem Soll-Ladezustand anzunähern.

7. Steuerungsverfahren für den Ladestand eines Zentralspeichers (10), der nach einem der vorhergehenden Ansprüche ausgestaltet ist und der an ein elektrisches Übertragungsnetz (11) angeschlossen ist, wobei der Zentralspeicher einen oder mehrere Energiespeichereinheiten (22) aufweist, die einer fremdkontrollierbaren Speichersektion (24) zugeordnet sind, wobei das Steuerungsverfahren die folgenden Schritte aufweist:
• Zuweisen von Teilkapazitäten der fremdkontrollierbaren Speichersektion (24) zu Ladestandkonten, die von entfernten Anschlussteilnehmern (14, 15) steuerbar sind;
• Empfangen einer Einspeise- oder Ausspeiseanweisung für mindestens ein Ladestandkonto bzw. die zugewiesene Teilkapazität;
• Steuern eines Energieflusses von oder zu der fremdkontrollierbaren Speichersektion (24) (ferngesteuerter Zentralspeicher-Energiefluss F) gemäß der Einspeise- oder Ausspeiseanweisung unter entsprechender Ladung oder Entladung der zugewiesenen Teilkapazität.

8. Steuerungsverfahren nach Anspruch 7, wobei der Zentralspeicher (10) weiterhin eine eigenkontrollierte Speichersektion (23) mit einer Speicherkapazität aufweist, aus der zur Erbringung von Regelleistung eine Kompensations-Energiemenge mit dem Übertragungsnetz (11) durch einen Regelleistungs-Energiefluss (P) austauschbar ist, wobei für ein Ladestandkonto durch Fernsteuerung festlegbar ist, ob von der einem Ladestandkonto zugewiesenen Teilkapazität ein Ladungstransfer (X) zu der eigenkontrollierten Speichersektion (23) erfolgen darf, um einen Ist-Ladezustand der eigenkontrollierten Speichersektion (23) einem Soll-Ladezustand anzunähern, insbesondere unter Transfer einer festgelegten maximalen Energiemenge.

9. Energiefluss-Steuerungsverfahren für einen Netzanschluss (14, 15) an ein elektrisches Übertragungsnetz (11), wobei an dem Netzanschluss (14, 15) zumindest ein Energieerzeuger (33, 43) und/oder zumindest ein Energieverbraucher betrieben werden,
**dadurch gekennzeichnet, dass**
• ein Teilnehmer-Energiefluss (T1, T2) ermittelt wird, der mit dem elektrischen Übertragungsnetz (11) zu einem bestimmten Zeitpunkt oder in einem bestimmten Zeitintervall ausgetauscht wird oder werden soll, und dass
• eine Kommunikationsverbindung zu einem Zentralspeicher (10) nach einem der Ansprüche 1 bis 6 herstellbar ist, bei dem ein Ladestandkonto mit einer zugewiesenen und fernsteuerbaren Teilkapazität eines elektrischen Energiespeichers geführt ist, und dass
• eine Einspeise- oder Ausspeiseanweisung erzeugt wird, die den Zentralspeicher (10) anweist, eine Aufnahme oder Abgabe von Energie an dem Zentralspeicher (10) so zu steuern, dass der Teilnehmer-Energiefluss in Bezug auf das Übertragungsnetz (11) durch einen ferngesteuerten Zentralspeicher-Energiefluss (F) kompensiert wird.

10. Energiefluss-Steuerungsverfahren nach Anspruch 9, wobei an dem Netzanschluss (14, 15) zumindest zeitweise ein lokaler Energiespeicher (31, 32, 41, 42) verfügbar ist und wobei ein festgestellter momentaner Teilnehmer-Energiefluss (T1, T2) oder ein bevorstehender Teilnehmer-Energiefluss (T1, T2) zumindest anteilig in dem lokalen Energiespeicher (31, 32, 41, 42) gepuffert wird, sodass er mit einer zeitlichen Verzögerung gegenüber dem Übertragungsnetz (11) wirksam wird.

11. Energiefluss-Steuerungsverfahren nach einem der Ansprüche 9 oder 10, wobei mit dem Zentralspeicher (10) ein Energiefluss-Zeitplan abgestimmt wird, sodass der Teilnehmer-Energiefluss (T1, T2) und der zugehörige ferngesteuerte Zentralspeicher-Energiefluss (F) synchron mit dem Übertragungsnetz (11) ausgetauscht werden, wobei der Zeitplan insbesondere eine zeitliche Verzögerung gemäß Anspruch 8 vorgibt oder berücksichtigt.

12. Energiefluss-Steuerungsverfahren nach einem der Ansprüche 9 bis 11, wobei der lokale Energiespeicher ein mobiler Energiespeicher (32, 42) ist, insbesondere ein elektrischer Haupt-Energiespeicher eines Fahrzeugs, während es mit dem Netzanschluss (14, 15) verbunden ist, wobei von dem lokalen Energiespeicher (32, 42) nur eine festgelegte Teilkapazität für das Puffern des Teilnehmer-Energieflusses (T1, T2) verwendet wird.

13. Energiefluss-Steuerung für einen Netzanschluss zu einem elektrischen Übertragungsnetz (11),
**dadurch gekennzeichnet, dass**
die Energiefluss-Steuerung dazu ausgebildet ist, ein Energiefluss-Steuerungsverfahren nach einem der Ansprüche 9 bis 12 auszuführen.

## Claims

1. Central storage device comprising a plurality of electrical energy storage units (22) and an energy flow controller (20), wherein the central storage device (10) is connected to an electrical transmission grid (11) and is designed to receive and to output electrical energy from and to the transmission grid (11) in a controlled manner, wherein
• the energy flow controller (20) is designed, in order to produce control power for the transmission grid (11), to feed a control power energy flow (P) into the electrical transmission grid (11) or to draw same from the transmission grid (11), wherein the control power is produced within a minimum reaction time after a specific deviation of a measured grid frequency from a setpoint grid frequency has been identified, and
• wherein the central storage device (10) has a separately controlled storage device section (23) to which multiple energy storage units (22) of the plurality of electrical energy storage units (22) are assigned, and has an externally controllable storage device section (24) to which multiple energy storage units (22) of the plurality of energy storage units (22) are likewise assigned, wherein the separately controlled storage device section (23) has a storage device capacity that corresponds at least to a compensation amount of energy that is exchanged with the transmission grid during a process of producing control power, and the externally controllable storage device section (24) has a further storage device capacity, and
• wherein a charge transfer (X) takes place between the separately controlled storage device section (23) and the externally controllable storage device section (24) between or during processes of producing control power,
**characterized in that**
the charge transfer (X) takes place by way of a change of assignment of one or more energy storage units (22) to the storage device sections (23, 24).

2. Central storage device according to Claim 1, **characterized in that** the central storage device (10) has an externally controllable storage device section (23) that is able to be charged and discharged through a controlled consumption of energy from the electrical transmission grid (11) or controlled output of energy to the electrical transmission grid (11) (remotely controlled central storage device energy flow F), wherein energy is consumed or output through remote control in accordance with feed-in or feed-out instructions that are received via a communication network (12).

3. Central storage device according to Claim 2, wherein the feed-in or feed-out instructions are made by remote connection participants or grid connections (14, 15) to the electrical transmission grid (11).

4. Central storage device according to Claim 2 or 3, wherein a feed-in or feed-out instruction contains information about a participant energy flow (T1, T2) that is exchanged with the electrical transmission grid (11) by the remote connection participant or at the remote grid connection (14, 15) at a specific time or in a specific time interval, and wherein the remotely controlled central storage device energy flow (F) is controlled such that the participant energy flow (T1, T2) in relation to the transmission grid (11) is compensated for.

5. Central storage device according to one of the preceding claims, wherein the central storage device (10) has one or more adapters to which energy storage units (22) of external operators are able to be connected, in particular an adapter for the connection of a recycled or reused main electrical energy storage device of a vehicle (32, 42).

6. Central storage device according to one of the preceding claims, wherein the charge transfer (X) takes place in order to bring an actual state of charge of the separately controlled storage device section (23) closer to a setpoint state of charge.

7. Control method for the charge state of a central storage device (10) that is designed in accordance with one of the preceding claims and that is connected to an electrical transmission grid (11), wherein the central storage device has one or more energy storage units (22) that are assigned to an externally controllable storage device section (24), wherein the control method has the following steps:
• allocating partial capacities of the externally controllable storage device section (24) to charge state accounts that are able to be controlled by remote connection participants (14, 15);
• receiving a feed-in or feed-out instruction for at least one charge state account or the allocated partial capacity;
• controlling an energy flow from or to the externally controllable storage device section (24) (remotely controlled central storage device energy flow F) in accordance with the feed-in or feed-out instruction with corresponding charging or discharging of the allocated partial capacity.

8. Control method according to Claim 7, wherein the central storage device (10) furthermore has a separately controlled storage device section (23) with a storage device capacity from which a compensation amount of energy is able to be exchanged with the transmission grid (11) through a control power energy flow (P) in order to produce control power, it being possible to define, for a charge state account, through remote control, whether a charge transfer (X) is allowed to take place from the partial capacity allocated to a charge state account to the separately controlled storage device section (23) in order to bring an actual state of charge of the separately controlled storage device section (23) closer to a setpoint state of charge, in particular with transfer of a defined maximum amount of energy.

9. Energy flow control method for a grid connection (14, 15) to an electrical transmission grid (11), wherein at least one energy generator (33, 43) and/or at least one energy consumer is operated at the grid connection (14, 15),
**characterized in that**
• a participant energy flow (T1, T2) is determined, this being exchanged, or intended to be exchanged, with the electrical transmission grid (11) at a specific time or in a specific time interval, and **in that**
• it is possible to establish a communication connection to a central storage device (10) according to one of Claims 1 to 6, in which a charge state account with an allocated and remotely controllable partial capacity of an electrical energy storage device is managed, and **in that**
• a feed-in or feed-out instruction is generated, this instructing the central storage device (10) to control consumption or output of energy at the central storage device (10) such that the participant energy flow in relation to the transmission grid (11) is compensated for by a remotely controlled central storage device energy flow (F).

10. Energy flow control method according to Claim 9, wherein a local energy storage device (31, 32, 41, 42) is at least temporarily available at the grid connection (14, 15) and wherein at least part of a defined instantaneous participant energy flow (T1, T2) or an upcoming participant energy flow (T1, T2) is buffered in the local energy storage device (31, 32, 41, 42), such that it becomes active with a time delay in relation to the transmission grid (11).

11. Energy flow control method according to either of Claims 9 and 10, wherein the central storage device (10) is used to adjust an energy flow schedule, such that the participant energy flow (T1, T2) and the associated remotely controlled central storage device energy flow (F) are exchanged synchronously with the transmission grid (11), wherein the schedule in particular specifies or takes into consideration a time delay in accordance with Claim 8.

12. Energy flow control method according to one of Claims 9 to 11, wherein the local energy storage device is a mobile energy storage device (32, 42), in particular a main electrical energy storage device of a vehicle, while it is connected to the grid connection (14, 15), wherein only a defined partial capacity is used by the local energy storage device (32, 42) to buffer the participant energy flow (T1, T2).

13. Energy flow controller for a grid connection to an electrical transmission grid (11),
**characterized in that**
the energy flow controller is designed to carry out an energy flow control method according to one of Claims 9 to 12.

## Revendications

1. Accumulateur central, comprenant une pluralité d'unités d'accumulation d'énergie électrique (22) et un dispositif de commande de flux énergétique (20), l'accumulateur central (10) étant raccordé à un réseau de transmission électrique (11) et réalisé pour absorber et restituer de l'énergie électrique du réseau de transmission (11) de manière commandée, dans lequel
• pour la production d'une puissance de régulation pour le réseau de transmission (11), le dispositif de commande de flux énergétique (20) est réalisé pour injecter un flux énergétique de puissance de régulation (P) dans le réseau de transmission électrique (11) ou pour le soutirer du réseau de transmission (11), la production de la puissance de régulation ayant lieu dans un temps de réponse minimal après qu'un écart déterminé d'une fréquence de réseau mesurée par rapport à une fréquence de réseau de consigne a été constaté, et
• dans lequel l'accumulateur central (10) présente une section d'accumulation autocontrôlée (23) à laquelle plusieurs unités d'accumulation d'énergie (22) parmi la pluralité d'unités d'accumulation d'énergie électrique (22) sont associées, et présente une section d'accumulation pouvant être contrôlée en externe (24) à laquelle aussi plusieurs unités d'accumulation d'énergie (22) parmi la pluralité d'unités d'accumulation d'énergie (22) sont associées, dans lequel la section d'accumulation autocontrôlée (23) présente une capacité d'accumulation qui correspond au moins à une quantité d'énergie de compensation qui est échangée avec le réseau de transmission pendant un processus de production de puissance de régulation, et la section d'accumulation (24) pouvant être contrôlée en externe (24) présente une autre capacité d'accumulation, et
• dans lequel, entre ou pendant des processus de production de puissance de régulation, un transfert de charge (X) a lieu entre la section d'accumulation autocontrôlée (23) et la section d'accumulation pouvant être contrôlée en externe (24),
**caractérisé en ce que** le transfert de charge (X) a lieu au moyen d'une modification d'une association d'une ou de plusieurs unités d'accumulation d'énergie (22) aux sections d'accumulation (23, 24).

2. Accumulateur central selon la revendication 1, **caractérisé en ce que** l'accumulateur central (10) présente une section d'accumulation pouvant être contrôlée en externe (23) qui peut être chargée et déchargée par une absorption commandée d'énergie du réseau de transmission électrique (11) ou une restitution commandée d'énergie au réseau de transmission électrique (11) (flux énergétique d'accumulateur central télécommandé F), dans lequel l'absorption ou la restitution d'énergie est effectuée par télécommande selon des instructions d'injection et de soutirage qui sont reçues par l'intermédiaire d'un réseau de communication (12).

3. Accumulateur central selon la revendication 2, dans lequel les instructions d'injection ou de soutirage sont effectuées par des abonnés raccordés distants ou des raccordements de réseau (14, 15) du réseau de transmission électrique (11).

4. Accumulateur central selon la revendication 2 ou 3, dans lequel une instruction d'injection ou de soutirage contient une information concernant un flux énergétique d'abonné (T1, T2) qui est échangé avec le réseau de transmission électrique (11) en provenance de l'abonné raccordé distant ou au niveau du raccordement de réseau distant (14, 15) à un instant déterminé ou dans un intervalle de temps déterminé, et dans lequel le flux énergétique d'accumulateur central télécommandé (F) est commandé de telle sorte que le flux énergétique d'abonné (T1, T2) est compensé par rapport au réseau de transmission (11).

5. Accumulateur central selon l'une quelconque des revendications précédentes, dans lequel l'accumulateur central (10) présente un ou plusieurs adaptateurs auxquels les unités d'accumulation d'énergie (22) peuvent être raccordées par des opérateurs externes, en particulier un adaptateur pour raccorder un accumulateur d'énergie électrique principal, récupéré ou réutilisé, d'un véhicule (32, 42).

6. Accumulateur central selon l'une quelconque des revendications précédentes, dans lequel le transfert de charge (X) a lieu pour rapprocher un état de charge réel de la section d'accumulation autocontrôlée (23) d'un état de charge de consigne.

7. Procédé de commande pour l'état de charge d'un accumulateur central (10) qui est configuré selon l'une quelconque des revendications précédentes et qui est raccordé à un réseau de transmission électrique (11), dans lequel l'accumulateur central présente une ou plusieurs unités d'accumulation d'énergie (22) qui sont associées à une section d'accumulation (24) pouvant être contrôlée en externe, le procédé de commande présentant les étapes suivantes consistant à :
• attribuer des capacités partielles de la section d'accumulation (24) pouvant être contrôlée en externe à des comptes d'état de charge qui peuvent être commandés par des abonnés raccordés distants (14, 15) ;
• recevoir une instruction d'injection ou de soutirage pour au moins un compte d'état de charge ou la capacité partielle attribuée ;
• commander un flux énergétique en provenance ou à destination de la section d'accumulation (24) pouvant être contrôlée en externe (flux énergétique d'accumulateur central télécommandé F) selon l'instruction d'injection ou de soutirage sous une charge ou décharge correspondante de la capacité partielle attribuée.

8. Procédé de commande selon la revendication 7, dans lequel l'accumulateur central (10) présente en outre une section d'accumulation autocontrôlée (23) d'une capacité d'accumulation à partir de laquelle, pour la production d'une puissance de régulation, une quantité d'énergie de compensation peut être échangée avec le réseau de transmission (11) par un flux énergétique de puissance de régulation (P), dans lequel il est possible de définir par télécommande si un transfert de charge (X) à partir de la capacité partielle attribuée à un compte d'état de charge peut avoir lieu vers la section d'accumulation autocontrôlée (23) afin de rapprocher un état de charge réel de la section d'accumulation autocontrôlée (23) d'un état de charge de consigne, en particulier en transférant une quantité d'énergie maximale définie.

9. Procédé de commande de flux énergétique pour un raccordement de réseau (14, 15) à un réseau de transmission électrique (11), dans lequel au moins un générateur d'énergie (33, 43) et/ou au moins un consommateur d'énergie fonctionnent au niveau du raccordement de réseau (14, 15),
**caractérisé en ce que**
• un flux énergétique d'abonné (T1, T2) est établi qui est ou sera échangé avec le réseau de transmission électrique (11) à un instant déterminé ou dans un intervalle de temps déterminé, et **en ce que**
• une liaison de communication avec un accumulateur central (10) selon l'une quelconque des revendications 1 à 6 peut être établie, dans lequel un compte d'état de charge avec une capacité partielle attribuée et télécommandable d'un accumulateur d'énergie électrique est tenu, et **en ce que**
• une instruction d'injection ou de soutirage est générée qui ordonne à l'accumulateur central (10) de commander une absorption ou une restitution d'énergie au niveau de l'accumulateur central (10) de telle sorte que le flux énergétique d'abonné est compensé par rapport au réseau de transmission (11) par un flux énergétique d'accumulateur central télécommandé (F).

10. Procédé de commande de flux énergétique selon la revendication 9, dans lequel un accumulateur d'énergie local (31, 32, 41, 42) est disponible au moins temporairement au niveau du raccordement de réseau (14, 15), et dans lequel un flux énergétique d'abonné momentané (T1, T2) constaté ou un flux énergétique d'abonné imminent (T1, T2) est retenu au moins proportionnellement dans l'accumulateur d'énergie local (31, 32, 41, 42) de sorte qu'il prend effet avec une temporisation par rapport au réseau de transmission (11) .

11. Procédé de commande de flux énergétique selon l'une quelconque des revendications 9 ou 10, dans lequel l'accumulateur central (10) met au point un planning de flux énergétique de sorte que le flux énergétique d'abonné (T1, T2) et le flux énergétique d'accumulateur central télécommandé (F) associé sont échangés de manière synchrone avec le réseau de transmission (11), dans lequel le planning spécifie ou tient compte en particulier d'une temporisation selon la revendication 8.

12. Procédé de commande de flux énergétique selon l'une quelconque des revendications 9 à 11, dans lequel l'accumulateur d'énergie local est un accumulateur d'énergie mobile (32, 42), en particulier un accumulateur d'énergie électrique principal d'un véhicule pendant que celui-ci est relié au raccordement de réseau (14, 15), dans lequel seule une capacité partielle définie de l'accumulateur d'énergie local (32, 42) est utilisée pour retenir le flux d'énergie d'abonné (T1, T2).

13. Dispositif de commande de flux énergétique pour un raccordement de réseau à un réseau de transmission électrique (11), **caractérisé en ce que** le dispositif de commande de flux énergétique est réalisé pour exécuter un procédé de commande de flux énergétique selon l'une quelconque des revendications 9 à 12.
